Europäisches Patentamt

(19) European Patent Office

Office européen des brevets

(11) Publication number: **0 011 434**
**B1**

## (12) EUROPEAN PATENT SPECIFICATION

(45) Date of publication of patent specification: 20.07.83

(21) Application number: 79302481.1

(22) Date of filing: 06.11.79

(51) Int. Cl.³: **C 08 L 5/00, C 08 L 5/04,**
**D 06 M 15/04, D 06 P 1/48,**
**D 21 H 1/24, D 21 H 1/38**

(54) Blend of algin and tamarind kernel powder (TKP), a paper coating and a dye-bath liquor containing said blend.

(30) Priority: 09.11.78 US 959121
09.11.78 US 959119

(43) Date of publication of application:
28.05.80 Bulletin 80/11

(45) Publication of the grant of the patent:
20.07.83 Bulletin 83/29

(84) Designated Contracting States:
DE FR GB IT NL

(56) References cited:
AT - B - 226 052
DE - A - 2 616 881
GB - A - 275 617
US - A - 3 255 028

CHEMICAL ABSTRACTS, Vol. 52 : 17703 (1958)
MELLIAND TEXTILBERICHTE, 37, Nr. 5, Mai
1956, HEIDELBERG, C. R. SAVUR:
"Verwendung von Tamarindensamenpektin in
der Textilindustrie"

(73) Proprietor: MERCK & CO. INC.
126, East Lincoln Avenue P.O. Box 2000
Rahway New Jersey 07065 (US)

(72) Inventor: Racciato, Joseph S.
4522 Acoma Avenue
San Diego, California, 92117 (US)
Inventor: Yin, Robert I.
1275 Torrey Pines Road
La Jolla, California, 92037 (US)

(74) Representative: Crampton, Keith John Allen et al,
D YOUNG & CO 10 Staple Inn
London WC1V 7RD (GB)

Courier Press, Leamington Spa, England.

# 0 011 434

Blend of algin and tamarind kernel powder (TKP), a paper coating and a dye-bath liquor containing said blend

This invention is concerned with the use of algin and TKP (as hereinafter defined) in commercial gums, especially in the paper and textile industries.

Algin is a water-soluble polysaccharide found in all species of Phaeophyceae, brown algae. The generic term algin designates the derivatives of alginic acid chemically extracted from Phaeophyceae. The derivatives of alginic acid include varied soluble salts (e.g. sodium alginate) and esters (e.g. propylene glycol alginate). These derivatives, i.e. algin, are stored in their dry-powdered form. Algin is used in commercial gum applications for its thickening, suspending, emulsifying, stabilizing, adhesive, film-forming, and gel-forming properties.

Tamarind kernel powder is a commercially available product made by husking and milling the seed kernels of the tree *Tamarindus indica Linn*.

## Summary of the invention

It has now been found that a novel composition produced by blending algin and TKP (defined below) wherein the ratio of algin to TKP on a weight:weight bases can range from 90:10 to 5:95, exhibits unexpected synergistic effects as measured by its physical properties. The blend of algin and TKP is identified as synergistic by improved viscosity measurements on a Brookfield viscometer. The blend's synergistic properties are further evidenced by improved film-forming, ink holdout, and water-retention properties (recognized parameters in the paper industry) and by improved tensile strength and elongation of properties of films (recognized parameters for warp sizing used in the textile industry). Although the synergistic effects of algin and TKP are exhibited over a broad range of weight:weight ratios, blends low in algin are preferred; i.e., algin:TKP<50:50. Most preferred are blends in the range 20:80 to 5:95.

As used herein, algin is a generic designation for alginic acid and derivatives of alginic acid, including soluble salts (for example sodium alginates) and soluble esters (for example propylene glycol alginate).

As used herein, the term "tamarind kernel powder", which is usually abbreviated to TKP, refers to: 1) tamarind kernel powder, a commercially available product obtained from the seed kernels of the tree *Tamarindus indica Linn;* 2) cold-water-soluble tamarind kernel powder (CWSTG) prepared by mixing crude tamarind kernel powder in water at a concentration of 0.1 to 75.0% (preferably 20—50%), heating the solution to a temperature of 35—130°C (preferably 70—100°C) until a paste is formed, then drying and milling the resulting product, which is cold-water-soluble tamarind kernel powder; 3) purified tamarind kernel powder as taught by U.S. 3,399,189 for obtaining the tamarind polysaccharide extract and by U.S. 3,287,350 for extraction of the tamarind polysaccharide as tamarind seed jellose (TSJ); and 4) other tamarind kernel powder constituents, i.e., the residual after the tamarind polysaccharide has been removed, viz. a combination of proteins, fiber fat, inorganic salts, free sugars, and tannins.

Algin and TKP can be blended to any desired ratio and stored as a blend until needed. These two components may be combined, each as a dry powder and stored as a dry-powder blend, or they initially may be put separately into solution and then the two solutions blended and stored as a wet blend or the separate solutions may be combined in the final formulation. The dry blends can be weighed and combined with other ingredients or first dissolved prior to further use. As tamarind kernel powder is not soluble in cold water, its entry into solution requires heating to approximately 82°C. Agitation by a mixer may also be required to put algin and TKP into solution. In the wet blend, solutions in the range preferably of 0.5% to 10.0% of each component are prepared and then added together to attain the desired blend ratio ranging from 90:10 to 5:95 algin:TKP by weight. Final concentrations of the blend ranging from approximately 0.5% to 10.0% then can be prepared depending on the intended end use (for example, concentrations of 0.9% to 4.0% are typical of blends in the paper industry). Solutions lower than 0.5% and higher than 10% may also be prepared.

Blends of algin and TKP yield unexpectedly high viscosities in aqueous solutions when compared to the predicted viscosities resulting from addition of the viscosities of the two components blended in solution.

The blends of algin and TKP have utility as additives for: thickening, suspending, emulsifying, stabilizing, gelling, lubricating, film-forming, and binding. In particular, the blends can be used in the following applications or products: can sealing, boiler compounds, latex creaming, welding-rod fluxes, brazing pastes, ceramic glazes and extrusions, cleaners and polishes, toys, emulsions (latex, asphalt, silicone), silver recovery, seed coatings, spray control for pesticides, emulsifiable concentrated and flowable pesticides, tobacco binders, water-based inks, lithographic fountain solutions, leather finishes, hydromulching and hydroseeding, textile printing and finishing, wet-end paper additives, wet-end paper retention and formation aids, anti-stick compounds, mold-release agents, liquid resins, slurry and packaged explosives, petroleum and water-well drilling muds, petroleum stimulation fluids, cosmetics, pharmaceutical suspensions and emulsions. This list is suggestive of the possible types of application in which these blends can be used.

2

The blends of algin and TKP are particularly useful in formulations used for textile warp sizing and for paper coating and surface sizing. In pigmented paper coatings, the weight of the blend is usually 0.05 to 200% of that of the pigment, and the pigment preferably makes up 0.3 to 1.5% of the total weight of the coating.

In commercial dyeing operations in which a substrate is impregnated by padding with an aqueous dye-bath liquid, as in the conventional Thermosol process (a well established procedure for commercial dyeing operations), the dye-impregnated substrate is commonly subjected to an intermediate drying stage prior to thermofixation or reduction of the dye. It is during this intermediate drying stage that problems with migration of the dye can occur. Migration of the dye is undesirable as the substrate becomes mottled, or unevenly shaded, thereby detracting from the appearance and the value of the dyed textile substrate.

In the conventional drying operation following the impregnating of the textile with the desired dye, the treated substrate is heated and held for a time sufficient to dry off the dyebath liquor, conveniently at a temperature of about 100°C for convenience of rapid action by any suitable means such as hot air, infrared radiation, microwave oven, or the like. Pressures may range from below to above atmospheric pressure. It is during this conventional drying operation that dye migration to the substrate surface is known to occur, said migration tending to be uncontrolled, random, and uneven, resulting in an uneven overall dyeing action, variegation, and a generally inferior quality of the finished product.

Dye migration occurs three-dimensionally; that is, in the warp and filling directions and through the fabric thickness. Migration in the warp direction does not significantly affect substrate appearance; however, migration in the filling direction and through the substrate thickness always will occur to some degree even under proper commercial drying conditions.

Many materials, including natural gums (e.g., algin) and various synthetic gums have been proposed as antimigrants to gain control over migration. (Refer to U.S. 3,928,676, which teaches the art of controlling migration on porous materials by using resin compositions and methods that include addition of an aluminum hydroxy salt of high molecular weight.) Many of the materials proposed in the literature are described with respect to their thickening characteristics, the terms "thickener" and "antimigrant" commonly—but erroneously—being used as synonyms. While many proposed antimigrants also find application in systems as thickeners, the more persuasive teachings available suggest that the viscosity of the dye bath *per se* does not have any significant effect with respect to the uncontrolled dye migration problem previously discussed. Rather, it is suggested that the function of the antimigrant is to agglomerate the dye particles in a controlled manner. The resulting agglomeration of particles imposes size constraints on the dye particles, thereby decreasing their mobility, or migration. (Refer to "Processes Involved in Particulate Dye Migration, *Textile Chemist and Colorist, vol.,* 7:11, p. 192—200, 1975.)

It has now been found that the novel algin/TKP blends of this invention are useful as antimigrants in pad-dying systems.

As used herein, substrate means a textile such as a woven, non-woven, or knitted fabric, and also yarns, threads, and fibers which can be pad dyed on a continuous basis.

A blend of algin and TKP may be used in pad-dyeing operations with any available dyes and combinations thereof; e.g., disperse, direct, vat, reactive, or acid dyes. No limitation has yet been found to the types of dyes which may be used with this invention. Dye/blend antimigrant solutions may be used to print any substrate suitable for pad dyeing; for example, 100% polyester, 100% cotton, polyester/cotton blends in any ratio, corduroy, 100% nylon, 100% polypropylene, 100% acrylic, and polyester/cotton/nylon/polypropylene/acrylic blends in any combination and ratio. The use level of blend as an antimigrant will vary from 0.01% to over 5.00% based on the total weight of the dye-bath liquor with the blend concentration being preferably in the range of about 0.01% to 3.00% by weight. These levels will depend on the type of substrate and dye used as well as the method of application and drying procedure. At blend concentrations above 5%, the viscosity of the solution becomes a problem and such solutions are not recommended.

It should be noted that the pH of the aqueous dye-bath liquor of the invention can generally vary over a rather broad range although it will be appreciated that optimum pH limits will pertain to particular dye-bath systems.

After the textile material being treated has been impregnated with a desired dye by contact with the aqueous dye-bath liquor of the present invention, and the material has been dried by conventional means, the dye is fixed by heat or other means, e.g., by chemical action. Such fixation techniques are well known and established in the textile dyeing art. The present invention is not limited to any such technique but can be practiced with dye fixation by any conventional technique following the drying of the dye-impregnated fiber. Illustratively, curing may be carried out at temperatures of about 120 to 230°C for about three minutes to 15 seconds, depending on the fabric, the dye, and other contributing factors.

It will be appreciated by those skilled in the art that a variety of additives may be present in the aqueous dye-bath liquor apart from the dye itself and the water with which it is associated in the dye-bath liquor. Such additives include dye assistants, carriers, promoters, and the like, and these may be

3

**0011434**

employed in conventional amounts for their usual purposes in the practice of the present invention. The dye itself may be incorporated in the dye-bath liquor in amounts generally up to about 5% or more by weight based on the total weight of the dye bath. For heavier or darker shades the dye may be employed in amounts typically of from about 2% to about 5% by weight, most typically about 3—4% by weight; whereas light shades may be achieved by employing dye concentrations of about 1/2% by weight or less. Dye concentrations outside such ranges also can be employed within the scope of the invention; however, it is also understood that the amount of said dye-bath liquor with which the textile material is impregnated by padding, spraying, coating, printing, or other means commonly at 25—100% wet pickup will depend upon the color requirements of any given application.

The extent of dye migration can be non-subjectively measured by a test recently adopted by the American Association of Textile Chemists and Colorists (AATCC), as described in "Evaluation of Dyestuff Migration", AATCC Test Method 140—1974, and in *AATCC Technical Manual (23)*. Warp- and filling-direction migration can be determined by this test, as can migration through the substrate thickness, by mathematical equations relating the measured horizontal-migration values with the vertical thickness migration.

Briefly, in the AATCC test, a substrate is padded through a dye- and auxiliary-containing bath, is padded to a specified pick-up level, and finally is placed on a flat, nonporous surface (e.g., glass plate) and covered with a watch glass. The watch glass serves to minimize any evaporation and, thus, aids assessment of any particulate migration in the liquid phase by forcing the migration to occur horizontally through the substrate interior, i.e., from the watch-glass-covered area to the uncovered area.

Table I presents various application of the novel blend of this invention in the printing and paper industry. Percentages of the blend recommended for usage in a wide variety of coatings is shown for both pigmented and non-pimented coating.

4

TABLE I

| Coating | Major ingredient (parts by weight) | | % Blend[1] | | % Total solid | |
|---|---|---|---|---|---|---|
| | Pigment[2] | Binder[3] | Useful range | Preferred | Useful range | Preferred |
| Non-pigmented | | | | | | |
| 1. Calender box | —[4] | 0—100 | 0.01—25 | 0.01—10 | 0.05—30 | 0.2—15 |
| 2. Size press | — | 0—100 | 0.01—35 | 0.01—15 | 0.1—30 | 5—15 |
| 3. Blade coater | — | 0—100 | 0.01—60 | 0.01—25 | 0.1—25 | 5—25 |
| Pigmented | | | | | | |
| 1. Wet-end coater | 100 | 10—100 | 0.1—200 | 0.2—100 | 5—50 | 35—45 |
| 2. Size press coater | 100 | 3—30 | 0.1—200 | 0.1—3.0 | 5—60 | 25—50 |
| 3. Calender box | 100 | 3—30 | 0.1—200 | 0.1—3.0 | 5—60 | 25—50 |
| 4. Roll coater | 100 | 3—30 | 0.01—35 | 0.05—1.5 | 20—72 | 50—62 |
| 5. Air knife coater | 100 | 3—30 | 0.01—35 | 0.05—1.5 | 30—67 | 38—60 |
| 6. Blade coater | 100 | 3—30 | 0.01—35 | 0.05—1.5 | 2—72 | 30—68 |
| 7. Rod coater | 100 | 3—30 | 0.01—35 | 0.05—1.5 | 30—72 | 55—65 |
| 8. Cast coater | 100 | 8—30 | 0.01—35 | 0.05—1.5 | 35—70 | 40—62 |
| 9. Gravure coater | 100 | 3—30 | 0.01—35 | 0.05—1.5 | 35—72 | 40—65 |

1. Values for non-pigmented coating are based on the total weight of coating; for pigmented coatings on the amount of pigment.
2. Pigments include clay, $TiO_2$, $CaCO_3$, satin white, talc, etc.
3. Binders include latex, casein, soya protein, starch, HEC, CMC, animal glue, etc.
4. Minute amounts of pigment are often used for the purpose of filling the paper.

**0 011 434**

In the examples, reference is made to the following tests, all of which are recognized in the paper or textile industries. Parenthetical references are to standards of the Technical Association of the Pulp and Paper Industry, Inc., 1 Dunwoody Park, Atlanta, Georgia, 30338, or to the American Association of Textile Chemists and Colorists.

Paper Industry

1. Gurley densometer test: the film-forming property of a coating is measured by comparing at the same pressure and temperature the time in seconds it takes for 100 cc of air to pass through a 6.4 cm² piece of coated paper versus a piece of uncoated paper (i.e., air resistance). Air resistance indirectly indicates degree of beating, absorbency (penetration of oil, water, etc.), apparent specific gravity, filtering efficiency, etc. (Tappi 460 OS-75).

2. K & N® mottle test: the ink holdout property of a coating, i.e., estimates of resistance of a sheet of paper or paperboard to the penetration of ink and varnish are obtained by this method. A drop of K & N gray oil-based ink is allowed to remain on a sample of treated paper and then is wiped off. Poor ink film leveling gives a mottled appearance to the paper, which is rated on a scale of 0 to 10 (poor to good). (Tappi 553).

3. Vanceometer test: a simulation test of ink and solvent holdout (i.e., oil resistance) of a paper surface by measuring reflectance of a paper surface offered with a thin film of mineral oil after 30 and 60 seconds. High percentage reflectance simulates high ink and solvent holdout, which is desired for most paper applications. Reflectance is measured on a Vanceometer absorption tester and is given in % reflectance. (Tappi 519.)

4. Gloss ink test: involves the printing of a thin film of Litho Gloss ink (obtained from Custom Inks & Coatings Co.). After drying, a measurement is made on a Photovolt Reflectometer Model 670 with the Tappi 75° Gloss Sensing Unit Model 660-P. A higher figure indicates better ink holdout paper surface. This test is widely used as a partial measure of the surface quality and shiny appearance of coated paper. (Tappi 480 os-78.)

5. IGT ink drop test: this test measures pick resistance of paper by close simulation of the printing process. It simulates the ink holdout of a paper surface subjected to printing press nip pressure conditions (i.e., pick resistance of the paper). The spread size (in mm²) of 0.3 ml of dibutylphthalate is measured on an IGT printability tester (Research Institute for Printing & Allied Industries TNO, P.O. Box 4150, Amsterdam, Holland) at B setting, 40 kg nip pressure. Larger spread size indicates better ink holdout, which is desirable for gravure, litho, and letter-press applications. (Tappi T499 su-64).

6. Antimigrant Test: A substrate is padded through a dye- and auxiliary-containing bath, is padded to a specified pick-up level, and finally is placed on a flat, nonporous surface (e.g., glass plate) and covered with a watch glass. The watch glass serves to minimize any evaporation and, thus, aids assessment of any particulate migration in the liquid phase by forcing the migration to occur horizontally through the substrate interior, i.e., from the watch-glass covered area to the uncovered area. (AATCC test method 140—1974).

7. Tensile strength and elongation: the major benefit to be tested is if the ingredients added to the dye plasticize the film without affecting the elongation. Desirable measurements would then include high tensile strength with high elongation (approximately 10—15% elongation is necessary). This test measures desirable properties for a warp size used during the weaving of a fabric.

General

8. Brookfield viscosity measurements: solution viscosities are measured using a Brookfield LVF viscometer. Data are given in centipoises (cP), which are equivalent to milli-Pascal seconds (mPa.s). All readings are at room temperature unless otherwise specified. The synergism values used herein are obtained by comparing the actual viscosities observed to the theoretical values calculated using the following formulae for a blend x:y

$$cP_{cal'd} = (\%x \cdot \text{viscosity } x) + (\%y \cdot \text{viscosity } Y)$$

$$\% \text{ syn.} = \frac{cP_{act} - cP_{cal'd}}{cP_{cal'd}} \cdot 100$$

The present invention is hereinafter illustrated by reference to specific examples. It is understood that such examples are presented to provide a further understanding as to the advantages of the invention and should not be construed as limiting the scope of the invention.

Example 1

Viscosity measurements

2% and 3% solutions by weight of sodium alginate, cold-water soluble tamarind kernel powder

K & N is a registered trademark of K & N Laboratories, Inc., 5331 Donsher Road, Countryside, Illinois, 60525 (CWSTG), and various blends of sodium alginate: CWSTG are prepared in distilled water. Viscosity measurements are made on a Brookfield LVT viscometer 60 rpm at 25°C. For the 2% solutions, spindle 2 is used; for 3%, spindle 3. The data of Table II are obtained.

These data show that blends of algin:TKP exhibit synergistic viscosities over an extremely wide range of blend ratios. A preferred blend, where increased viscosity is desired, is a blend which ranges from 75:25 to 10:90 algin:TKP.

TABLE II
Algin:TKP viscosities

| Concentration | | | | | | | | | | |
|---|---|---|---|---|---|---|---|---|---|---|
| 3% | | 100:0 | 90:10 | 75:25 | 50:50 | 25:75 | 10:90 | 5:95 | 0:100 | |
| | meas. | 520 | 720 | 900 | 1190 | 1190 | 1020 | 950 | 770 | |
| | calc'd. | — | 545 | 582 | 645 | 707 | 745 | 757 | — | |
| % Synergism | — | — | 32 | 55 | 84 | 68 | 37 | 22 | — | |
| 2% | | | | | | | | | | |
| | meas. | 170 | 190 | 230 | 280 | 300 | 250 | — | 170 | |
| | calc'd. | — | 170 | 170 | 170 | 170 | 170 | — | — | |
| % Synergism | — | — | 12 | 35 | 65 | 76 | 47 | — | — | |

Example 2
20:80 Dry blend

Sodium alginate and tamarind kernel powder are dry mixed in the ratio 20:80. The mix is dissolved in deionized water by heating to 74°C for 20 minutes with stirring. The solution is cooled to room temperature and concentrations of 0.5, 1, and 2% are prepared. These solutions are tested and the raw data extrapolated to a standard dry coat weight of 0.05 g/m². The results of the extrapolations are shown in Table III.

Example 3
33:67 Wet blend

CWSTG and sodium alginate are dissolved separately in deionized water and then added individually into a pigmented coating formulation suitable for coating methods such as size press, blade, air knife, roll and rod coating as follows:

| Components: | Amount (parts dry by weight) |
|---|---|
| Clay, No. 1 coating grade | 100.00 |
| Calgon®, tetrasodium pyrophosphate | 0.20 |
| Dispex® N40, organic dispersant | 0.20 |
| Dow latex® 638, latex binder | 15.00 |
| Tamol® 850, acrylic dispersing agent | 0.16 |
| Sodium alginate/TKP blend (33:67) | 0.60 |
| Final concentration (% solids) | 60.00 |

®Calgon is a registered trademark of Merck & Co., Inc.
Dispex is a registered trademark of Allied Colloids, Inc.
Dow latex is a registered trademark of Dow Chemical Co., U.S.A.
Tamol is a registered trademark of Rohm and Haas.

7

# 0 011 434

## TABLE III
### 20:80 Paper coating

| Sample | Gurley densometer | K & N Mottle | Gloss ink test |
|---|---|---|---|
| Control Paper | 30 | 0 | No test |
| Paper coated with sodium alginate | 78 | 7 | 36 |
| Paper coated with TKP | 45 | 5 | 33.6 |
| Paper coated with sodium alginate: TKP (20:80) Calculated | 53 | 5.2 | 34 |
| Paper coated with sodium alginate: TKP (20:80) Measured | 72 | 5.6 | 34.7 |

Part of the 60% solution is diluted to concentrations of 45% and 50%. A puddle-blade coater is used to coat the three solutions on a slack-sized label paper at 50 ft/min. operational speed. Controls with 100% sodium alginate and 100% CWSTG are similarly prepared. The data of Table IV are obtained as in Example 2, except that the data are extrapolated to a dry coat weight of 5 $g/m^2$.

## TABLE IV
### 33:67 Pigmented coating

| Sample | K & N Mottle test | Gloss ink test |
|---|---|---|
| Control, pigmented coating without gum | 4.5 | 53 |
| Coating with sodium alginate | 8.0 | 60 |
| Coating with TKP | 5.0 | 54 |
| Coating and algin:TKP (33:67) Calculated | 6.0 | 56 |
| Coating with algin:TKP (33:67) Measured | 7.5 | 57 |

Example 4
25:75 Algin:TKP as an antimigrant
A blend of 25:75 low-viscosity sodium alginate:tamarind kernel powder is made up in water at a 15% concentration by heating the solution to 75°C under constant agitation. The concentrate's temperature is held at 75°C for 15 minutes, then allowed to cool to room temperature. The concentrate then is used as an antimigrant in the following formulation:

| | Amount (grams) |
|---|---|
| Concentrate | 20 |
| Palacet® Black 2-PAT (disperse dye) | 45 |
| Tergitol® 15-S-9 (wetting agent) | 0.1 |
| Water | To make 1 liter solution |

®Palacet is a registered trademark of BASF Wyandotte Company.
Tergitol is a registered trademark of Union Carbide Corporation.

The resulting dye bath is padded onto 100% polyester fabric at a pick-up of 75%, based on the weight of the fabric. The fabric then is dried, with the dye first being fixed using steam at 20 psi for 40 minutes; subsequently, it is washed and dried. The resulting uniform, even color over the entire piece of fabric demonstrates the sodium alginate/TKP blend's usefulness as an antimigrant.

Example 5
10:90 Algin:TKP blend as a warp size
A 10% aqueous gum solution of 10:90 sodium alginate:CWSTG is prepared. The solution contains the plasticizing agent glycerine in the ratio blend:glycerine 100:10. Controls of 100:10 algin:glycerine and TKP:glycerine are also prepared. Films are prepared on glass plates by drawing down said 10% gum solutions with a doctor blade. After drying, the films are removed from the glass and conditioned at 70% humidity at 25°C for 3 days. The data of Table V are obtained.

## 0 011 434

### TABLE V
#### 10:90 Algin:TKP warp size

| Sample | Tensile strength (psi) | % Elongation |
|---|---|---|
| Algin:Gly 100:10 | 4000 | 15.25 |
| TKP:Gly 100:10 | 4275 | 3.80 |
| Algin:TKP Gly 10:90:10 | | |
| Calculated | 4248 | 5.0 |
| Measured | 5000 | 16.0 |

For a warp size to be effective during weaving, high tensile strength must be accompanied by at least 10—15% elongation. This example demonstrates the unexpected improvement in *both* tensile strength and elongation exhibited by this novel blend of gums.

A major unexpected benefit obtained by blending algin and TKP is the ability of the blend to retain film plasticity without adversely affecting tensile strength. Fabric flexibility is crucial during weaving as the threads will crack if they exhibit insufficient plasticity upon travel through the weaving machinery and exhibit insufficient tensile strength upon stretching.

Preparation of CWSTG

TKP is dispersed in water to a concentration of 20%, heated to 95°C for 10 minutes, then dried and milled. The resulting product is dissolved in water at 20°C and develops a viscosity of 35 cP at 1% concentration, measured on a Brookfield LVF viscometer, spindle 1, 60 rpm.

Preparation of CWSTG

TKP is dispersed in water at ambient temperature at a concentration of 40%. The resulting paste is drum dried with internal steam pressure at 40 psi, and then milled. The resulting product readily dissolves in ambient-temperature water and imparts a viscosity of 30 cP at 1% concentration, measured on a Brookfield LVF viscometer, spindle 1, 60 rpm.

### Claims

1. A blend of algin and TKP in which the weight ratio of algin to TKP is in the range from 90:10 to 5:95 and the TKP is tamarind kernel powder, cold-water-soluble tamarind kernel powder, tamarind polysaccharide, tamarind seed jellose and/or the non-polysaccharide tamarind kernel constituents.

2. A blend as claimed in Claim 1 in which the algin is sodium alginate or propylene glycol alginate.

3. A blend as claimed in Claim 2 in which the algin is sodium alginate and the TKP is tamarind kernel powder, cold-water-soluble tamarind kernel powder, tamarind polysaccharide or tamarind seed jellose and the algin:TKP weight ratio is in the range from 50:50 to 5:95.

4. A blend as claimed in Claim 3 in which the algin:TKP weight ratio is in the range from 20:80 to 5:95.

5. A non-pigmented paper coating consisting essentially of water, binder and an algin:TKP blend as claimed in any one of Claims 1 to 4 in which the blend makes up 0.01 to 35% of the total coating weight.

6. A pigmented paper coating consisting essentially of water, pigment, binder and an algin:TKP blend as claimed in any one of Claims 1 to 4 in which the weight of the blend is from 0.05 to 200% of the weight of the pigment.

7. A coating as claimed in Claim 6 in which the pigment makes up from 0.3 to 1.5% of the total weight of the coating.

8. An aqueous dye-bath liquor suitable for impregnating substrates, characterised in that from 0.01 to 5.00% by weight, based on the total weight of the dye bath liquor, of an algin:TKP blend as claimed in any one of Claims 1 to 4 is incorporated in the dye-bath liquor as an antimigrant.

### Patentansprüche

1. Gemisch von Algin und TKP, in dem das Gewichtsverhältnis von Algin zu TKP im Bereich von 90:10 bis 5:95 liegt und das TKP Tamarindenkernpulver, in kaltem Wasser lösliches Tamarindenkernpulver, Tamarinden-Polysaccharid, Tamarindensamen-Jellose und/oder die nicht-Polysaccharid-Tamarindenkern-Bestandteile ist.

2. Gemisch nach Anspruch 1, in dem das Algin Natriumalginat oder Propylenglykol-alginat ist.

3. Gemisch nach Anspruch 2, in dem das Algin Natriumalginat ist, und das TKP Tamarindenkernpulver, in kaltem Wasser lösliches Tamarindenkernpulver, Tamarinden-Polysaccharid oder Tamerindensamen-Jellose ist und das Algin:TKP — Gewichtsverhältnis im Bereich von 50:50 bis 5:95 liegt.

4. Gemisch nach Anspruch 3, in dem das Algin:TKP — Gewichtsverhältnis im Bereich von 20:80 bis 5:95 liegt.

5. Nicht-pigmentierte Papierbeschichtung, bestehend im wesentlichen aus Wasser, Bindemittel

# 0011434

und einem Algin:TKP — Gemisch, gemäss einem der Ansprüche 1 bis 4, in dem das Gemisch 0,01 bis 35% des Gewichts der gesamten beschichtung beträgt.

6. Pigmentierte Papierbeschichtung, bestehend im wesentlichen aus Wasser, Pigment, Bindemittel und einem Algin:TKP — Gemisch, gemäss einem der Ansprüche 1 bis 4, in dem das Gewicht des Gemischs 0,05 bis 200% des Gewichts des Pigments beträgt.

7. Überzug nach Anspruch 6, in dem das Pigment 0,3 bis 1,5% des Gesamtgewichts des Überzugs beträgt.

8. Wässrige Farbbad-Flüssigkeit, geeignet zum Imprägnieren von Substraten, dadurch gekennzeichnet, dass 0,01 bis 5,00 Gew.-%, basierend auf dem Gesamtgewicht der Farbbad-Flüssigkeit, eines Algin:TKP — Gemischs gemäß einem der Ansprüche 1 bis 4 in die Farbbad-Flüssigkeit, als das Wandern verhinderndes Mittel eingearbeitet ist.

## Revendications

1. Mélange d'algine et de PGT où le rapport pondéral de l'algine à la PGT est dans un intervalle allant de 90:10 à 5:95 et la PGT est de la poudre de graine de tamarinier, de la poudre de graine de tamarinier soluble dans l'eau froide, du polysaccharide de tamariner, de la gélose de semence tamarinier et/ou des constituants non polysaccharidiques de graine de tamarinier.

2. Mélange selon la revendication 1 où l'algine est l'alginate de sodium ou l'alginate de propylèneglycol.

3. Mélange selon la revendication 2 où l'algine est l'alginate de sodium et la PGT est la poudre de graine de tamarinier, la poudre de graine de tamarinier soluble dans l'eau froide, le polysaccharide de tamarinier ou la gélose de semence de tamarinier et le rapport pondéral algine:PGT est dans un intervalle allant de 50:50 à 5:95.

4. Mélange selon la revendication 3 où le rapport pondéral algine:PGT est dans un intervalle allant de 20:80 à 5:95.

5. Revêtement pour papier non pigmenté composé essentiellement d'eau, de liant et d'un mélange algine:PGT selon l'une quelconque des revendications 1 à 4 où le mélange constitue de 0,01 à 35% du poids total du revêtement.

6. Revêtement pour papier pigmenté composé essentiellement d'eau de pigment, de liant et d'un mélange algine:PGT selon l'une quelconque des revendications 1 à 4 où le poids du mélange est de 0,05 à 200% du poids du pigment.

7. Revêtement selon la revendication 6 où le pigment constitue de 0,3 à 1,5% du poids total du revêtement.

8. Liqueur pour bain de teinture aqueuse appropriée pour imprégner des substrats, caractérisée en ce qu'on incorpore dans la liqueur du bain de teinture, comme antimigrant, de 0,01 à 5,00% en poids, par rapport au poids total de la liqueur du bain de teinture, d'un mélange algine:PGT selon l'une quelconque des revendications 1 à 4.